# EUROPEAN PATENT SPECIFICATION

(11) **EP 4 059 756 B1**
(45) Date of publication and mention of the grant of the patent: **04.03.2026**
(21) Application number: 20887905.6
(22) Date of filing: 05.11.2020
(51) Int. Cl.: B60K 15/03, B60K 5/12, F16F 15/04

(54) **FUEL TANK AND VEHICLE COMPRISING SAME**
KRAFTSTOFFTANK UND FAHRZEUG DAMIT
RÉSERVOIR DE CARBURANT ET VÉHICULE LE COMPRENANT

(30) Priority: 13.11.2019 KR 20190145300
(43) Date of publication of application: 21.09.2022
(73) Proprietor: POSCO, Pohang-si, Gyeongsangbuk-do 37859 (KR)
(72) Inventor: JUNG, Han-Yong, Incheon 21985 (KR); CHUNG, Yang-Jin, Incheon 21985 (KR); YUN, Sang-Man, Incheon 21985 (KR); AHN, Deok-Chan, Incheon 21985 (KR); YOO, Il-Sang, Incheon 21985 (KR)
(74) Representative: Meissner Bolte Partnerschaft mbB
(86) International application number: PCT/KR2020/015409
(87) International publication number: WO 2021/096161

(56) References cited:
- DE-A1- 102009 036 911
- JP-A- 2002 127 765
- KR-A- 20040 006 054
- KR-A- 20050 017 623
- KR-B1- 100 658 766
- KR-B1- 100 892 820
- KR-B1- 100 915 132
- KR-B1- 100 915 132
- US-A1- 2010 102 068

## Description

### Technical Field

The present invention relates to a fuel tank and a vehicle including the same.

### Background Art

With the expansion of production of eco-friendly vehicles for reducing vehicle exhaust gas, the development and distribution of plug-in hybrid vehicles is expanding.

A plug-in hybrid vehicle may simultaneously use engine power of an internal combustion engine vehicle according to the related art and motor power of an electric vehicle to achieve both vehicle power and high-fuel efficiency.

When a plug-in hybrid vehicle travels long distance in a pure electric mode, an internal combustion engine is not used, so that a use rate of a fuel tank may be decreased.

In this case, pressure inside the fuel tank is increased by about 2 to 3 times due to evaporation of the fuel inside the fuel tank, as compared with that of the related art Documents US 2010/102068 A1, DE 10 2009 036911 A1, KR 100 915 132 B1 and KR 2005 0017623 A each discloses a fuel tank for a vehicle.

### Summary of Invention

### Technical Problem

An aspect of the present invention is to provide a fuel tank having reinforced rigidity to prevent damage to the fuel tank, resulting from an increase in pressure caused by evaporation of fuel inside the fuel tank, and a vehicle including the fuel tank.

Another aspect of the present invention is to provide a fuel tank reducing expansion force, generated by an increase in pressure caused by evaporation of fuel inside the fuel tank, and a vehicle including the fuel tank.

### Solution to Problem

According to an aspect of the present invention, a fuel tank is provided as defined in claim 1.

The first flange portion and the second flange portion of the fuel tank according to an embodiment may overlap each other, and an overlapping portion of the first flange and the second flange may be welded to be fixed.

Each of the first flange portion and the second flange portion of the fuel tank according to the invention has a through-hole, formed therein, through which fuel passes.

The fuel tank according to an embodiment may be provided in the form of a tube, and may include a center member having one end portion, to which the other side of the first recessed member is coupled, and the other end portion, to which the other side of the second recessed member is coupled, to form a hermetically closed space.

The center member of the fuel tank according to an embodiment may have a support groove portion formed therein in a length direction.

The center member of the fuel tank according to an embodiment may be coupled to the first recessed member in a circumferential direction of one end portion by arc welding and coupled to the second recessed member in a circumferential direction of the other end portion by arc welding.

The fuel tank according to an embodiment may include a buffer unit penetrating through and connecting the first flange portion and the second flange portion. The buffer unit may maintain a gap between the first flange portion and the second flange portion, connected to each other via the center member, with elastic force.

For example, the buffer unit of the fuel tank according to an embodiment may include a support bar penetrating through a through-hole formed in each of the first flange portion and the second flange portion, a first stepped bolt coupled to one end portion of the support bar, a first spring provided between the first stepped bolt and the first flange portion, a second stepped bolt coupled to the other end portion of the support bar, and a second spring provided between the second stepped bolt and the second flange portion.

In addition, the buffer unit of the fuel tank according to an embodiment may include a first stop tab, coupled to the support bar, provided to be adjacent to the first flange portion, and disposed in a more inner position of the center member than the first flange portion, and a second stop tab coupled to the support bar, provided to be adjacent to the second flange portion, and disposed in a more inner position of the center member than the second flange portion.

According to another aspect of the present invention a vehicle includes the above-described fuel tank, a driving engine configured to generate driving force with fuel stored in the fuel tank, and a body frame, in which the fuel tank and the driving engine are mounted, provided with a wheel member connected to the driving engine to receive the driving force. Advantageous Effects of Invention

As described above, according to example embodiments, a fuel tank and a vehicle including the fuel tank may reinforce rigidity to prevent damage to the fuel tank resulting from an increase in pressure caused by evaporation of fuel inside the fuel tank.

In another aspect, a fuel tank and a vehicle including the fuel tank may reduce expansion force generated by an increase in pressure caused by evaporation of fuel inside the fuel tank.

### Brief Description of Drawings

FIG. 1 is an exploded perspective view illustrating a fuel tank according to an embodiment in the present disclosure.
FIG. 2 is a perspective view illustrating a process of manufacturing a first recessed member of a fuel tank according to an embodiment.
FIG. 3 is a perspective view illustrating a center member of a fuel tank according to an example embodiment.
FIG. 4 is a perspective view illustrating an example including a center member of a fuel tank according to an embodiment.
FIG. 5 is a perspective view illustrating a process of manufacturing a center member of a fuel tank according to an embodiment.
FIG. 6 is a perspective view illustrating an example including a buffer unit of a fuel tank according to an embodiment.
FIG. 7 is a view illustrating a result of simulating a fuel tank according to an embodiment.
FIG. 8 illustrates a vehicle including a fuel tank according to an embodiment.

### Best Mode for Invention

Hereinafter, exemplary embodiments of the present invention will be described with reference to the accompanying drawings. However, embodiments of the present invention may be modified into various other forms, and the scope of the present invention is not limited to the embodiments described below. In addition, embodiments of the present invention may be provided in order to more completely explain the present invention to those with average knowledge in the art. In the drawings, shapes and sizes of elements may be exaggerated for clarity.

In addition, in the present specification, it should be understood that singular expressions include plural expressions unless clearly defined otherwise in the context, and reference numerals given in the same reference numerals or in a similar manner throughout the specification refer to the same elements or corresponding elements.

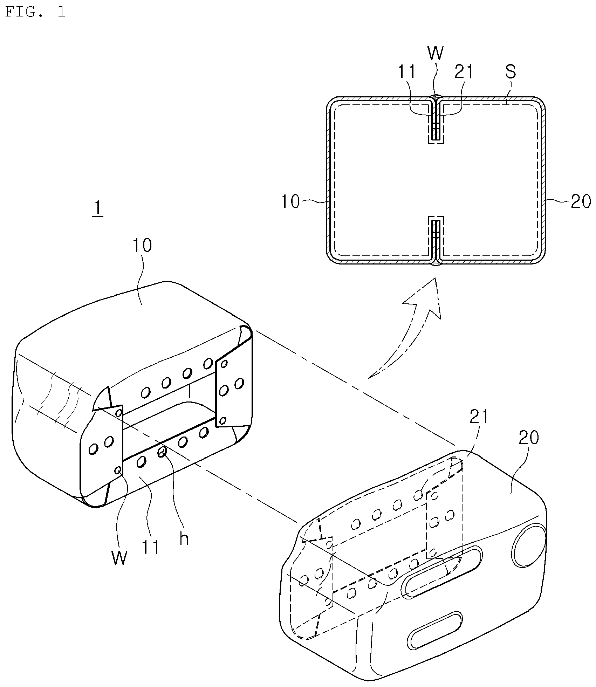

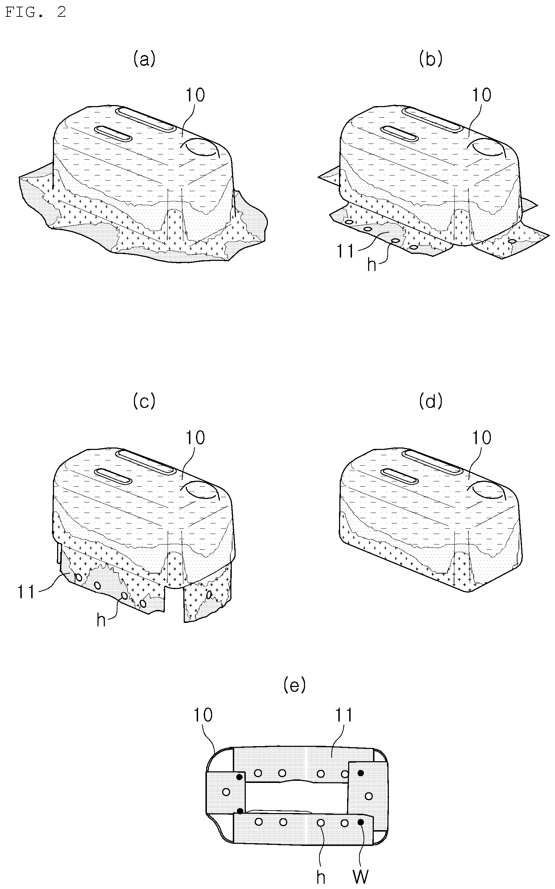

FIG. 1 is an exploded perspective view illustrating a fuel tank 1 according to an embodiment, and FIG. 2 is a perspective view illustrating a process of manufacturing a first recessed member 10 of the fuel tank 1 according to an embodiment.

The fuel tank 1 according to invention includes a first recessed member 10 and a second recessed member 20.

The first recessed member 10 is recessed on one side thereof to form a first receiving space and is open on the other side thereof. The first recessed member 10 includes a first flange portion 11 bent to cover the first receiving space.

The second recessed member 20 is disposed to oppose the other side of the first recessed member 10. The second recessed member 20 is recessed on one side thereof to form a second receiving space and is open on the other side thereof. The second recessed member 20 may include includes a second flange portion 21 bent to cover the second receiving space.

In the fuel tank 1 according to the embodiment, the first recessed member 10 including the first flange portion 11 and the second recessed member 20 including the second flange portion 21 may be coupled to each other, so that the first receiving space of the first received member 10 and the second receiving space of the second received member 20 may be combined to form a hermetically closed space S.

Accordingly, rigidity may be secured to prevent damage resulting from an increase in pressure caused by evaporation of fuel inside the fuel tank 1.

According to the invention, one side of each of the first recessed member 10 and the second recessed member 20 is recessed to form a first receiving space and a second receiving space, and the other side thereof may have an open can shape. For example, one end portion of each of the first recessed member 10 and the second recessed member 20 may be closed and the other end thereof may have an open can shape, and the first recessed member 10 and the second recessed member 20 may be disposed such that the hermetically closed space S is formed by coupling the other end portions having a can shape, open to each other. A flange shape may be added to the other end portion of the can shape to reinforce rigidity.

In particular, a portion remaining during forming of the first recessed member 10 or the second recessed member 20 may be formed as the first flange portion 11 or the second flange portion 21 to increase a use rate of a material and to secure target rigidity.

Hereinafter, a process of forming the first recessed member 10 or the second recessed member 20 will be described. As illustrated in FIG. 2A, a receiving space for receiving fuel may be formed in a blank material by a drawing process. In this case, in addition to a portion forming the receiving space, a portion remaining to fix the blank material may be formed. As illustrated in FIG. 2B, the portion remaining after forming the receiving space may be subjected to a trimming process to form the first flange portion 11 or the second flange portion 21. As illustrated in FIGS. 2C and 2D, a bending process may be performed such that the first flange portion or the second flange portion is bent to cover a portion of the receiving space. As illustrated in FIG. 2E, a welding process may be performed such that an overlapping portion of the bent first flange portion 11 or the bent second flange portion 21 is fixed by welding to increase rigidity.

As described above, the first recessed member 10 and the second recessed member 20 may be coupled to each other to form the hermetically closed space S to provide the fuel tank 1 in which fuel may be contained.

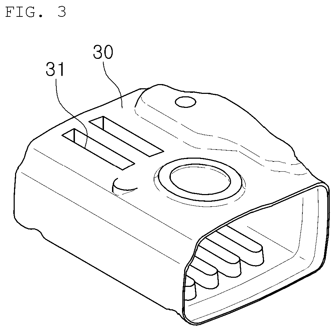

In this case, the first recessed member 10 and the second recessed member 20 may be directly coupled to each other to form the internal hermetically-closed space S, or a center member 30 may be provided between the recessed member 10 and the second recessed member 20 to expand the internal hermetically-closed space S. An embodiment including the center member 30 will be described later with reference to FIGS. 3 to 7.

The first flange portion 11 and the second flange portion 21 of the fuel tank 1 according to an embodiment may be bent into the first receiving space and the second receiving space, and overlapping portions thereof may be welded to be fixed.

A process of welding the overlapping portions may be a spot welding process, or an arc welding process using a welding material.

According to the invention, a through-hole "h" is formed in each of the first flange portion 11 and the second flange portion 21 of the fuel tank 1 according to an embodiment.

The through-hole "h" allows the fuel inside the fuel tank 1 to be flowable.

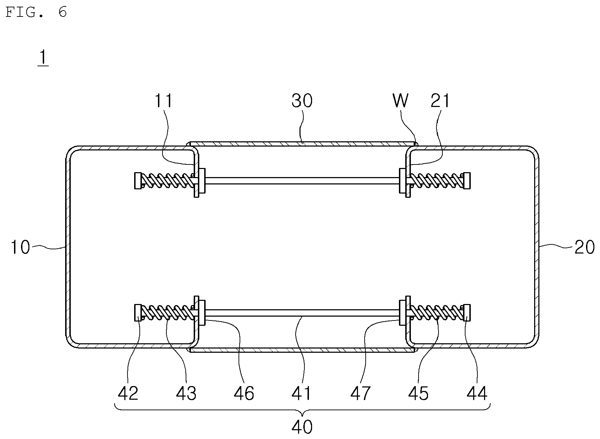

In the through-hole (h), a support bar 41 of a buffer unit 40 to be described later may be disposed to buffer an increase in pressure inside the fuel tank 1. A detailed description thereof will be described later with reference to FIG. 6.

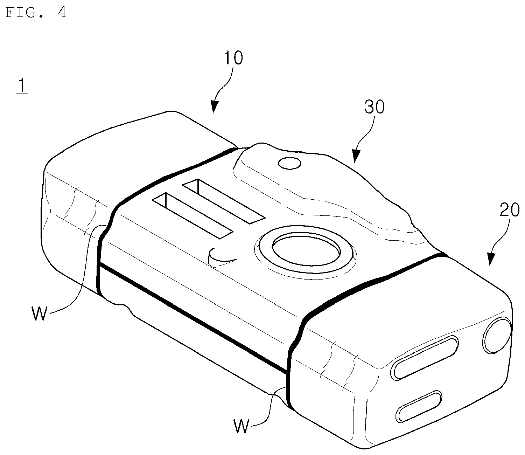

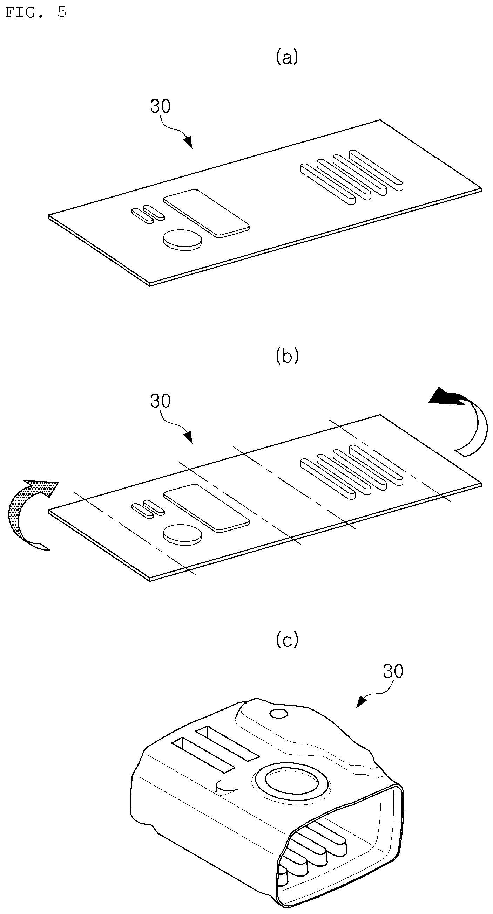

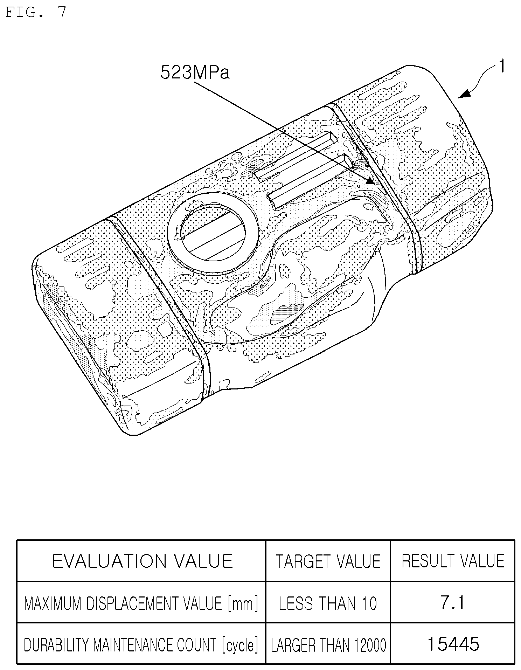

FIG. 3 is a perspective view illustrating a center member 30 of a fuel tank 1 according to an example embodiment, FIG. 4 is a perspective view illustrating an example in which the fuel tank 1 according to an embodiment includes a center member 30, FIG. 5 is a perspective view illustrating a process of manufacturing a center member 30 according to an embodiment, and FIG. 7 is a view illustrating a result of simulating the fuel tank 1 according to an embodiment.

The fuel tank 1 according to an embodiment is provided in the form of a tube, and may include a center member 30 having one end portion, to which the other side of the first recessed member 10 is coupled, and the other end portion, to which the other side of the second recessed member 20 is coupled, to form a hermetically closed space S.

The center member 30 is further provided between the first recessed member 10 and the second recessed member 20 to expand the hermetically closed space S of the fuel tank 1.

For example, the center member 30 may be provided in the form of a tube having opposite open end portions. One end portion of the opposite open end portions may be coupled to the first recessed member 10 and the other end portion thereof may be coupled to the second recessed member 20, so that the three members may cooperate to form the hermetically closed space S.

Hereinafter a process of forming the center member 30 will be described. As illustrated in FIG. 5A, a stamping process may be performed to form a support groove portion 31 in a blank material. As illustrated in FIG. 5B, a bending process may be performed to form the blank material, in which the support groove portion 31 or the like is formed, in the form of a tube. As illustrated in FIG. 5C, a welding process may be performed to form the center member 30 such that the form of the tube may be maintained.

The opposite end portions of the center member 30 may be coupled to the first recessed member 10 and the second recessed member 20 by welding. In this case, the center member 30 may be coupled to the first recessed member 10 and the second recessed member 20 by arc welding using a welding material.

The arc welding may be performed by, for example, metal inert gas (MIG) welding, CO₂ welding, metal active gas (MAG) welding, or the like. The arc welding may be a method in which an arc is generated between a welding material (a filler metal), a consumable wire supplied at a constant speed, and a base material and the welding material is melted by arc heat to form a bead.

In this case, a protective gas for preventing permeation of foreign substances may be supplied together, so that air may be blocked to protect the arc and the molten portion. As the protective gas, an inert gas such as argon (Ar), a carbon dioxide gas, or a mixed gas thereof may be used.

Since the coupling of the center member 30 and the first recessed member 10 and the second recessed member 20 is performed in an end portion of the center member 30, stress concentration may be prevented and tighter welding coupling may be achieved when a welding portion W is formed by arc welding.

For example, when welding is not performed on the end portion, the stress may be concentrated in a portion of the base material, in which the welding portion W is formed, to increase an issue such as fracturing. However, since the welding portion W is formed by welding portions between the end portion of the center member 30 and the first recessed member 10 and the second recessed members 20, an issue such as stress concentration may be alleviated.

A fuel tank 1 according to the related art may perform butt welding on a flange portion extending outwardly of an upper member and a lower member. A portion, in which a welding portion is formed, may be an intermediate point of a member rather than an end portion of the member. Accordingly, stress may be concentrated in an intermediate portion, in which the flange portions of the upper member and lower member overlap each other, to result in an issue such as fracture of a welding portion W. However, according to an embodiment, the welding portion W may be formed in an end portion of a center member 30, so that stress may be prevented from concentrating in the welding portion W.

FIG. 7 illustrates a simulation result, based on a maximum displacement value required in the fuel tank 1 and a count of repetitions of applying a positive pressure and a negative pressure, confirming that the maximum displacement value and the count were satisfied.

As experimental conditions, a positive pressure of 0.35 bar and a negative pressure of -0.16 bar were applied, and a first number of repetitions were set to 0 bar → 0.35 bar → 0 bar → -0.16 bar → 0 bar. In addition, a maximum displacement value, a reference value, is 10 mm and a reference repetition count is a value greater than 12000.

The maximum displacement value of the fuel tank 1 according to an embodiment was 7.1 mm satisfying a reference value, and the repetition count was 15445, satisfying a reference value.

According to the simulation, it may be confirmed that a portion, to which maximum stress is applied, is a bonding portion of the first recessed member 10 or the second recessed member 20 and the center member 30. It may also be confirmed that, in this case, the maximum stress is about 523 MPa.

Accordingly, a buffer unit 40 to be described later may be provided to relieve such a stress concentration. A detailed description thereof will be described later with reference to FIG. 6.

The fuel tank 1 according to the embodiment may satisfy noise conditions depending on sloshing.

In the noise conditions, the fuel tank 1 is decelerated at an initial speed of 8 km/h and -0.2 g (where g is acceleration of gravity), and noise is measured to be determined from a position 30 cm away from a front when the fuel tank 1 is stopped. A reference noise level at the time of stopping the fuel tank 1 is 65 dB or less.

It was confirmed that a value of 57.8 dB, smaller than an existing noise level, was derived in the fuel tank 1 according to an embodiment.

A support groove portion 31 may be formed in the center member 30 of the fuel tank 1 according to an embodiment in a length direction. The support groove portion 31 may further increase the rigidity of the fuel tank 1.

FIG. 6 is a perspective view illustrating an example in which the fuel tank 1 includes the buffer unit 40. The buffer unit 40 may penetrate through the first flange portion 11 and the second flange portion 21, and may allow the first recessed member 10 and the second recessed member 2 to maintain elastic force.

Accordingly, stress concentration in a bonding portion of the first recessed member 10 or the second recessed member 20 and the center member 30 may be relieved.

In other words, a phenomenon, in which the first recessed member 10 and the second recessed member 20, respectively coupled to opposite end portions of the center member 30, move away from each other due to an increase in pressure inside the fuel tank 1, may be alleviated to relieve stress concentration in a coupling portion of the center member 30 and the first recessed member 10 or the second recessed member 20.

The buffer unit 40 according to the embodiment may include a support bar 41 provided to penetrate through a through-hole "h" formed in each of the first flange portion 11 and the second flange portion 21, a first stepped bolt 42 coupled to one end portion of the support bar 41, a first spring 43 provided between the first stepped bolt 42 and the first flange portion 11, a second stepped bolt 44 coupled to the other end portion of the support bar 41, and a second spring 45 provided between the second stepped bolt 44 and the second flange portion 21.

The support bar 41 may connects the first recessed member 10 and the second recessed member 20 to each other, and may be disposed to penetrate through the through-hole "h" of each of the first recessed member 10 and the second recessed member 20.

The first spring 43 and the second spring 45 may be connected to the support bar 41, provided between the first recessed member 10 and the second recessed member 20, to elastically connect the first recessed member 10 and the second recessed member 20 to each other.

For example, the first spring 43 may be disposed between the first stepped bolt 42 and the first flange portion 11 to be configured such that the first flange portion 11 may have elastic force toward the second recessed member 20.

In addition, the second spring 45 may be disposed between the second stepped bolt 44 and the second flange portion 21 to be configured such that the second flange portion 21 may have elastic force toward the first recessed member 10.

Accordingly, the first recessed member 10 and the second recessed member 20 may be prevented from being separated from each other when the pressure inside the fuel tank 1 is increased. In addition, tensile stress may be prevented from being concentrated in the welding portion W for coupling between the first recessed member 10 or the second recessed member 20 and the center member 30.

The buffer unit 40 may further include a first stop tab 46 and a second stop tab 47 to prevent compressive stress from being concentrated between the center member 30 and the first recessed member 10 or the second recessed member 20.

For example, the buffer unit 40 of the fuel tank 1 according to an embodiment may include the first stop tab 46, coupled to the support bar 41, provided to be adjacent to the first flange portion 11, and disposed in a more inner position of the center member 30 than the first flange portion 11, and the second stop tab 47 coupled to the support bar 41, provided to be adjacent to the second flange portion 21, and disposed in a more inner position of the center member 30 than the second flange portion 21.

The first stop tab 46 and the second stop tab 47 may compensate for tensile stress caused by an increase in pressure inside the fuel tank 1 in a coupling portion between the center member 30 and the first recessed member 10 or the second recessed member 20.

For example, when additional pressure change does not occur in the hermetically closed space S of the fuel tank 1, the first stop tab 46 may be disposed inwardly of the center member 30 from the first flange portion 11 in a direction toward a central portion of the center member 30. In addition, the second stop tab 47 may be disposed inwardly of the center member 30 from the second flange portion 21 in a direction toward the central portion of the center member 3 to be configured to compensate for tensile stress in a state in which the pressure inside the fuel tank 1 is increased.

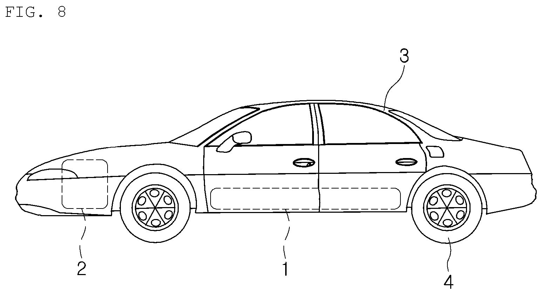

FIG. 8 is a diagram illustrating a vehicle including a fuel tank 1 according to an embodiment. The vehicle according to an embodiment may include the fuel tank 1, a driving engine configured to generate driving force with fuel stored in the fuel tank 1, and a body frame 3, in which the fuel tank 1 and the driving engine 2 are mounted, provided with a wheel member 4 connected to the driving engine 2 to receive the driving force.

As described above, the vehicle according to the embodiment may include the above-described fuel tank 1 such that rigidity may be reinforced to prevent the fuel tank 1 from being damaged by evaporation of fuel inside the fuel tank 1 and, in another aspect, to reduce expansion force generated by an increase in the pressure resulting from the evaporation of the fuel inside the fuel tank 1.

The driving engine 2 may be a driving engine 2 using some liquid fuel of a gasoline engine, a diesel engine, or the like, which may provide driving force to the wheel member 4, and the body frame 3 may include all frames constituting a vehicle including an underframe, a side frame, and the like.

While example embodiments have been shown and described above, it will be apparent to those skilled in the art that modifications and variations could be made without departing from the scope of the present disclosure as defined by the appended claims.

## Claims

1. A fuel tank (1) comprising:
a first recessed member (10); and
a second recessed member (20) disposed to oppose the other side of the first recessed member,
wherein the first recessed member (10) is recessed on one side thereof to form a first receiving space,
**characterized in that**
the first recessed member (10) is open on the other side thereof and includes a first flange portion (1i) bent to cover a portion of the first receiving space, the second recessed member (20) is recessed on one side thereof to form a second receiving space, and
the second recessed member (20) is open on the other side thereof and includes a second flange portion (21) bent to cover a portion of the second receiving space
wherein each of the first flange portion (11) and the second flange portion (21) has a though-hole (h) formed therein, through which fuel passes.

2. The fuel tank of claim 1, wherein the first flange portion (11) and the second flange portion (21) overlap each other, and an overlapping portion of the first flange and the second flange is welded to be fixed.

3. The fuel tank of claim 1, comprising:
a center member (30) having one end portion, to which the other side of the first recessed member (10) is coupled, and the other end portion, to which the other side of the second recessed member (20) is coupled, to form a hermetically closed space (S).

4. The fuel tank of claim 3, wherein the center member (30) has a support groove portion (31) formed therein in a length direction.

5. The fuel tank of claim 3, wherein the center member (30) is coupled to the first recessed member (10) and the second recessed member (20) by arc welding.

6. The fuel tank of claim 3, comprising:
a buffer unit (40) penetrating through the first flange portion (11) and the second flange portion (21) and maintaining a gap between the first recessed member (10) and the second recessed member (20) with elastic force.

7. The fuel tank of claim 6, wherein the buffer unit (40) comprises:
a support bar (41) penetrating through the through-hole (h) formed in each of the first flange portion a (11) and the second flange portion; (21);
a first stepped bolt (42) coupled to one end portion of the support bar;
a first spring (43) provided between the first stepped bolt (42) and the first flange portion (11)
a second stepped bolt (44) coupled to the other end portion of the support bar; and
a second spring (45) provided between the second stepped bolt (44) and the second flange portion (21).

8. The fuel tank of claim 7, wherein the buffer unit (40) comprises:
a first stop tab (46) coupled to the support bar, provided to be adjacent to the first flange portion (11), and disposed in a more inner position of the center member (30) than the first flange portion (11); and
a second stop tab (47) coupled to the support bar, provided to be adjacent to the second flange portion (21), and disposed in a more inner position of the center member than the second flange portion (21).

9. A vehicle comprising:
a fuel tank (1) of any one of claims 1 to 8;
a driving engine (2) configured to generate driving force with fuel stored in the fuel tank; and
a body frame (3), in which the fuel tank and the driving engine are mounted, provided with a wheel member (4) connected to the driving engine to receive the driving force.

## Patentansprüche

1. Kraftstofftank (1), umfassend:
ein erstes vertieftes Element (10); und
ein zweites vertieftes Element (20), das derart angeordnet ist, dass es der anderen Seite des ersten vertieften Elements gegenüberliegt,
wobei das erste vertiefte Element (10) auf einer Seite davon vertieft ist, um einen ersten Aufnahmeraum zu bilden,
**dadurch gekennzeichnet, dass**
das erste vertiefte Element (10) auf der anderen Seite davon offen ist und einen ersten Flanschabschnitt (11) beinhaltet, der gebogen ist, um einen Abschnitt des ersten Aufnahmeraums abzudecken,
das zweite vertiefte Element (20) auf einer Seite davon vertieft ist, um einen zweiten Aufnahmeraum zu bilden, und
das zweite vertiefte Element (20) auf der anderen Seite davon offen ist und einen zweiten Flanschabschnitt (21) beinhaltet, der gebogen ist, um einen Abschnitt des zweiten Aufnahmeraums abzudecken,
wobei jeder von dem ersten Flanschabschnitt (11) und dem zweiten Flanschabschnitt (21) ein Durchgangsloch (h), das darin gebildet ist, aufweist, durch welches Kraftstoff fließt.

2. Kraftstofftank nach Anspruch 1, wobei der erste Flanschabschnitt (11) und der zweite Flanschabschnitt (21) einander überlappen und ein überlappender Abschnitt des ersten Flansches und des zweiten Flansches geschweißt ist, um befestigt zu werden.

3. Kraftstofftank nach Anspruch 1, umfassend:
ein mittiges Element (30) mit einem Endabschnitt, an den die andere Seite des ersten vertieften Elements (10) gekoppelt ist, und dem anderen Endabschnitt, an den die andere Seite des zweiten vertieften Elements (20) gekoppelt ist, um einen hermetisch abgeschlossenen Raum (S) zu bilden.

4. Kraftstofftank nach Anspruch 3, wobei das mittige Element (30) einen Stütznutabschnitt (31) aufweist, der darin in einer Längenrichtung gebildet ist.

5. Kraftstofftank nach Anspruch 3, wobei das mittige Element (30) durch Lichtbogenschweißen an das erste vertiefte Element (10) und das zweite vertiefte Element (20) gekoppelt ist.

6. Kraftstofftank nach Anspruch 3, umfassend:
eine Puffereinheit (40), die durch den ersten Flanschabschnitt (11) und den zweiten Flanschabschnitt (21) verläuft und einen Spalt zwischen dem ersten vertieften Element (10) und dem zweiten vertieften Element (20) mit elastischer Kraft aufrechterhält.

7. Kraftstofftank nach Anspruch 6, wobei die Puffereinheit (40) Folgendes umfasst:
eine Stützstange (41), die durch das Durchgangsloch (h) verläuft, das in jedem von dem ersten Flanschabschnitt (11) und dem zweiten Flanschabschnitt (21) gebildet ist;
einen ersten abgestuften Bolzen (42), der an einen Endabschnitt der Stützstange gekoppelt ist;
eine erste Feder (43), die zwischen dem ersten abgestuften Bolzen (42) und dem ersten Flanschabschnitt (11) bereitgestellt ist;
einen zweiten abgestuften Bolzen (44), der an den anderen Endabschnitt der Stützstange gekoppelt ist; und
eine zweite Feder (45), die zwischen dem zweiten abgestuften Bolzen (44) und dem zweiten Flanschabschnitt (21) bereitgestellt ist.

8. Kraftstofftank nach Anspruch 7, wobei die Puffereinheit (40) Folgendes umfasst:
eine erste Anschlagnase (46), die an die Stützstange gekoppelt ist und bereitgestellt ist, um benachbart zu dem ersten Flanschabschnitt (11) zu sein, und an einer weiter innenliegenden Position des mittigen Elements (30) als der erste Flanschabschnitt (11) angeordnet ist; und
eine zweite Anschlagnase (47), die an die Stützstange gekoppelt ist und bereitgestellt ist, um benachbart zu dem zweiten Flanschabschnitt (21) zu sein, und an einer weiter innenliegenden Position des mittigen Elements als der zweite Flanschabschnitt (21) angeordnet ist.

9. Fahrzeug, umfassend:
einen Kraftstofftank (1) nach einem der Ansprüche 1 bis 8;
einen Antriebsmotor (2), der dazu konfiguriert ist, Antriebskraft mit Kraftstoff, der in dem Kraftstofftank gelagert ist, zu erzeugen; und
einen Karosserierahmen (3), in dem der Kraftstofftank und der Antriebsmotor montiert sind und der mit einem Radelement (4) versehen ist, das mit dem Antriebsmotor verbunden ist, um die Antriebskraft aufzunehmen.

## Revendications

1. Réservoir de carburant (1) comprenant :
un premier organe en retrait (10) ; et
un deuxième organe en retrait (20) disposé de manière à faire face à l'autre côté du premier organe en retrait,
dans lequel le premier organe en retrait (10) est en retrait sur un côté de celui-ci pour former un premier espace de réception,
**caractérisé en ce que**
le premier organe en retrait (10) est ouvert sur son autre côté et inclut une première portion de bride (11) pliée pour recouvrir une portion du premier espace de réception,
le deuxième organe en retrait (20) est en retrait sur un côté de celui-ci pour former un deuxième espace de réception, et
le deuxième organe en retrait (20) est ouvert sur son autre côté et inclut une deuxième portion de bride (21) pliée pour recouvrir une portion du deuxième espace de réception,
dans lequel chacune de la première portion de bride (11) et de la deuxième portion de bride (21) comporte un trou traversant (h) formé en son sein, à travers lequel du carburant passe.

2. Réservoir de carburant selon la revendication 1, dans lequel la première portion de bride (11) et la deuxième portion de bride (21) se chevauchent, et une portion de chevauchement de la première bride et de la deuxième bride est soudée pour être fixée.

3. Réservoir de carburant selon la revendication 1, comprenant :
un organe central (30) comportant une portion d'extrémité, à laquelle l'autre côté de l'organe en retrait (10) est couplé, et l'autre portion d'extrémité, à laquelle l'autre côté du deuxième organe en retrait (20) est couplé, pour former un espace hermétiquement fermé (S).

4. Réservoir de carburant selon la revendication 3, dans lequel l'organe central (30) comporte une portion de rainure de support (31) formée en son sein dans un sens de la longueur.

5. Réservoir de carburant selon la revendication 3, dans lequel l'organe central (30) est couplé au premier organe en retrait (10) et au deuxième organe en retrait (20) par soudage à l'arc.

6. Réservoir de carburant selon la revendication 3, comprenant :
une unité tampon (40) pénétrant à travers la première portion de bride (11) et la deuxième portion de bride (21) et maintenant un espacement entre le premier organe en retrait (10) et le deuxième organe en retrait (20) avec une force élastique.

7. Réservoir de carburant selon la revendication 6, dans lequel l'unité tampon (40) comprend :
une barre de support (41) pénétrant à travers le trou traversant (h) formé dans chacune de la première portion de bride (11) et de la deuxième portion de bride (21) ;
un premier boulon étagé (42) couplé à une portion d'extrémité de la barre de support ;
un premier ressort (43) prévu entre le premier boulon étagé (42) et la première portion de bride (11) ;
un deuxième boulon étagé (44) couplé à l'autre portion d'extrémité de la barre de support ; et
un deuxième ressort (45) prévu entre le deuxième boulon étagé (44) et la deuxième portion de bride (21).

8. Réservoir de carburant selon la revendication 7, dans lequel l'unité tampon (40) comprend :
une première languette d'arrêt (46) couplée à la barre de support, prévue pour être adjacente à la première portion de bride (11), et disposée dans une position plus interne de l'organe central (30) que la première portion de bride (11) ; et
une deuxième languette d'arrêt (47) couplée à la barre de support, prévue pour être adjacente à la deuxième portion de bride (21), et disposée dans une position plus interne de l'organe central que la deuxième portion de bride (21).

9. Véhicule comprenant :
un réservoir de carburant (1) selon l'une quelconque des revendications 1 à 8 ;
un moteur d'entraînement (2) configuré pour générer une force d'entraînement avec du carburant stocké dans le réservoir de carburant ; et
une ossature de carrosserie (3), dans laquelle le réservoir de carburant et le moteur d'entraînement sont montés, pourvue d'un organe de roue (4) relié au moteur d'entraînement pour recevoir la force d'entraînement.
